# EUROPEAN PATENT SPECIFICATION

(11) **EP 3 502 427 B1**
(45) Date of publication and mention of the grant of the patent: **01.09.2021**
(21) Application number: 18214132.5
(22) Date of filing: 19.12.2018
(51) Int. Cl.: F01M 13/04, F01M 13/00, B01D 45/04, B01D 45/08

(54) **OIL SEPARATOR INCLUDING SPIRAL MEMBERS DEFINING HELICAL FLOW PATHS**
ÖLABSCHEIDER MIT SPIRALFÖRMIG GEWICKELTEN ELEMENTEN, DIE STRÖMUNGSWEGE DEFINIEREN
SÉPARATEUR D'HUILE COMPRENANT DES ÉLÉMENTS EN SPIRALE DÉLIMITANT DES TRAJETS D'ÉCOULEMENT HÉLICOÏDAUX

(30) Priority: 20.12.2017 US 201715848102
(43) Date of publication of application: 26.06.2019
(73) Proprietor: NOVARES US Engine Components, Inc., Walworth WI 53184-9545 (US)
(72) Inventor: Meister, Brandon, Eagle, WI Wisconsin 53119 (US); Moncur, Christopher Jared, Loves Park, IL Illinois 61111 (US); Tanner, Ryan, Elkhorn, WI Wisconsin 53546 (US); Hakes, Brad, Janesville, WI Wisconsin 53546 (US); Davidson, Oscar, Walworth, WI Wisconsin 53184 (US); Bunne, Jon, Elkhorn, WI Wisconsin 53121 (US)
(74) Representative: Manitz Finsterwald Patent- und Rechtsanwaltspartnerschaft mbB

(56) References cited:
- WO-A1-2005/049176
- JP-A- 2014 125 929
- JP-A- 2017 025 823
- US-A1- 2013 118 357
- US-A1- 2017 072 352

## Description

### TECHNICAL FIELD

The present disclosure relates generally to oil separators for separating oil from oil-laden gases. More particularly, the present disclosure relates to an oil separator that includes a plurality of spiral members that each define a helical flow path for guiding the oil-laden gases therethrough to separate oil from the oil-laden gases.

### BACKGROUND

This section provides background information related to the present disclosure which is not necessarily prior art to the inventive concepts disclosed and claimed herein.

Internal combustion engines of vehicles, such as automobiles, typically include a combustion chamber where a fuel/air mixture is burned to cause movement of a set of reciprocating pistons, as well as a crankcase which contains the crankshaft driven by the pistons. During operation, it is normal for the engine to experience "blowby," wherein combustion gases leak past the pistons from the combustion chamber and into the crankcase or cam shaft housing. These combustion or blowby gases typically contain by-products of the combustion process including moisture, acids and an oil mist. Oil mist can further be generated as the result of moving components in the crankcase sloshing hot oil around. It is known for the oil mist to be carried by a crankcase ventilation system to the intake manifold of the internal combustion engine where it is then burned in the combustion chamber along with the fuel/air mixture. This often results in an undesirable increase in oil consumption.

To reduce the unnecessary consumption of oil, it is known to utilize cyclone-type oil separators to remove oil from the oil-laden blowby gases prior to entering the intake manifold. An example of such an oil separator is disclosed in U.S. Patent No. 6,860,915 to Stegmaier et al. The oil separator includes a housing that defines a chamber. A partition assembly is disposed in the chamber and divides the chamber into an entry segment and an exit segment. The entry segment defines an inlet that extends into the chamber for receiving oil-laden gases from the crankcase, and the exit segment defines an outlet that extends into the chamber for expelling gases to the intake manifold. The partition assembly includes a channel that extends between a first opening in the entry segment and a second opening in the exit segment for passing the oil-laden gases between the entry and exit segments. A spiral member is disposed in the channel. The spiral member defines a helical flow path for guiding the oil-laden gases during passing of the oil-laden gases through the channel to separate the oil from the oil-laden gases. More specifically, small oil droplets pass and coalesce into larger droplets on the inner wall of the channel due to centrifugal forces created as the oil-laden gases pass through the helical flow path. The larger droplets are then directed by gravity to oil outlets and passed to a sump, which generally holds excess oil in the system.

To maximize the amount of oil that is separated by the helical flow path, it is desirable to maintain a relatively high velocity of the oil-laden gases passing therethrough while also providing a relatively large surface area of the inner walls of the channels for the oil to coalesce. Further, it is understood that the flow rate of the crankcase gas inside the helical flow path depends on the quantity of crankcase gas produced per unit time and on the flow cross-section of the flow path. The quantity of crankcase gas produced per unit time is largely related to the speed and load of the engine. To maximize oil separation efficiency, it is known to insert spiral members that have different cross-sectional areas into the channel to provide different flow cross-sections of the helical flow path depending on specific requirements. However, such a method does not actively adjust the effective flow cross-section of the helical flow path as the quantity of crankcase gas produced per unit time varies. Furthermore, oil separators are known to create a high pressure drop between the inlet and outlets, which interferes with the drainage of separated oil. More specifically, the high pressure drop interferes with the force of gravity pulling separated oil particles toward the oil outlets.
US 2017/0072352 A1 discloses an oil separator having the features of the preamble of claim 1. WO 2005/049176 A1 discloses an oil separator having a plunger valve.

In view of the above, there remains a continuing need to develop further improvements to oil separators. Particularly, it remains desirable to provide improvements toward maximizing separation efficiency of oil from the oil laden gases actively during varying low flow and high flow running conditions. It is also desirable to provide an oil separator that has minimal pressure losses between the inlet and outlet. It is further desirable to provide an oil separator that provides greater system design flexibility over conventional oil separator designs.

### SUMMARY

These objects are solved by an oil separator having the features of claim 1.

It is an aspect of the disclosure to provide an oil separator that provides a low pressure loss between the inlet and outlet of the oil separator per unit flow rate.

It is another aspect of the present disclosure to provide an oil separator that automatically adjusts the flow area of the openings into the helical flow paths to increase the average velocity of the oil-laden gases flowing therethrough to increase the separation efficiency of oil from the oil-laden gases in direct response to varying flow rates.

It is another aspect of the disclosure to provide an oil separator that is simple in design, easy to manufacture and modular / scalable such that it may be used with numerous engine sizes and configurations.

In accordance with these and other aspects of the present disclosure, an oil separator is provided for separating oil from oil-laden gases, the oil separator includes a housing having a plurality of cavities, with each of the cavities extending between a proximal end and a distal end. A plurality of augers, each has a helical flight extending about a longitudinal central axis between an inlet end and an outlet end. The augers being disposed in separate ones of the cavities to form helical flow paths about the central longitudinal axes. At least one of the augers has an annular wall extending from the inlet end about the central longitudinal axis to bound an inlet chamber. An end cap, having an inlet, is fixed to the annular wall over the inlet chamber. A plunger valve has a valve head disposed in the inlet chamber, wherein a spring member is configured to bias the valve head into a closed position in sealed abutment with the end cap to perfect a seal over the inlet to inhibit the flow of oil-laden gases therethrough. The valve head is moveable within the chamber against the bias of the spring member to an open position away from the end cap in response to pressure being applied against the valve head sufficient to overcome the bias of the spring member.

In accordance with the invention, the end cap is provided with a through opening extending along the longitudinal central axis and the plunger valve is provided with a valve stem extending from the valve head through the through opening. The spring member can be disposed about the valve stem.

In accordance with another aspect of the disclosure, the end cap can be provided with an annular outer periphery extending between upper and lower walls, with the through opening extending through the upper and lower walls and the inlet extending into the outer periphery and through the lower wall.

In accordance with another aspect of the disclosure, the valve stem can be provided having at least a portion with a non-circular outer peripheral surface, as viewed in cross-section taken transversely to the longitudinal central axis, with the through opening in the upper wall having a peripheral surface conforming at least in part with the non-circular outer peripheral surface of the valve stem to inhibit lateral play of the valve stem within the through opening in the upper wall.

In accordance with another aspect of the disclosure, the through opening in the lower wall has an enlarged peripheral surface relative to the valve stem to form the portion of the inlet extending through the lower wall between the valve stem and the enlarged peripheral surface of the through opening.

In accordance with another aspect of the disclosure, at least some of the helical flights can be provided having different helical pitches from one another to maximize the separating efficiency during varying flow rates.

In accordance with another aspect of the disclosure, at least one of the plurality of augers does not have a valve head disposed therein, wherein the at least one auger having a valve head disposed in the inlet chamber has a helical flight with a first helical pitch and the at least one auger not having a plunger head disposed therein has a helical flight with a second helical pitch, with the first helical pitch being greater than the second helical pitch.

In accordance with another aspect of the disclosure, the augers can be provided having one of a protrusion or a recess and the cavities can be provided having the other of a protrusion or a recess, with the protrusion and the recess being configured for a snap fit with one another to facilitate modular assembly.

In accordance with another aspect of the disclosure, the protrusion can be formed as an annular rib and the recess can be formed as an annular groove.

In accordance with another aspect of the disclosure, a protrusion can be provided to extend radially inwardly from the annular wall, with the protrusion forming a stop surface configured to confront the valve head to limit the movement of the valve head within the inlet chamber.

In accordance with another aspect of the disclosure, each of the cavities can be configured the same for interchangeable receipt of any one of the plurality of augers to facilitate modular assembly.

In accordance with another aspect of the disclosure, an oil separator for separating oil from oil-laden gases includes a housing having at least one cavity. An auger is disposed in at least one cavity, with the auger having a helical flight extending about a longitudinal central axis between an inlet end and an outlet end to form a helical flow path about the longitudinal central axis. At least one auger has an annular wall extending from the inlet end about the longitudinal central axis with an end wall fixed to the annular wall to bound an inlet chamber. The end wall includes an inlet extending into the inlet chamber to selectively allow the flow of oil-laden gases therethrough. A valve head is disposed in the inlet chamber and a spring member is configured to bias the valve head into a closed position to perfect a seal over the inlet to inhibit the flow of oil-laden gases therethrough. The valve head is moveable within the inlet chamber against the bias of the spring member to an open position in response to pressure being applied against the valve head sufficient to overcome the bias of the spring member.

Further aspects will become apparent to those possessing ordinary skill in the art from the description provided herein.

### DRAWINGS

The drawings described herein are for illustrative purposes of presently preferred embodiments and are not intended to limit the scope of the present disclosure. Accordingly, the inventive concepts associated with the present disclosure will be more readily understood by reference to the following description and appended claims in combination with the accompanying drawings, wherein:
FIG. 1 is an isometric view of an oil separator according to an aspect of the disclosure;
FIG. 2 is an isometric view of the oil separator of FIG. 1 wherein the outer walls of the housing are presented as being transparent;
FIG. 3 is a top cutaway view of the oil separator of FIG. 1 illustrating the inlet of the oil separator and a plurality of baffles;
FIG. 4 is a perspective view of a partition assembly of the oil separator according to an aspect of the disclosure;
FIG. 5 is a top view of the partition assembly of FIG. 4;
FIG. 6 is a front cutaway view of the partition assembly of FIG. 4 illustrating a configuration of a spiral member and valves;
FIG. 7 is a front perspective view of the partition assembly of FIG. 4 illustrating a configuration of a spiral member and a first embodiment of valves and upstream plates;
FIG. 8 is an exploded isometric view of the partition assembly of FIG. 4 illustrating a modular configuration of the partition assembly;
FIG. 9 is a perspective cutaway view of a partition assembly illustrating a second embodiment of valves and upstream plates;
FIG. 10 is a perspective view of the partition assembly of FIG. 9 further illustrating the second embodiment of valves and upstream plates;
FIG. 11 is an exploded perspective view of a cam cover assembly including a modular oil separator according to another aspect of the disclosure;
FIG. 11A is an enlarged exploded perspective view of the modular oil separator of FIG. 11;
FIG. 11B is a view similar to FIG. 11A illustrating a further aspect of the modular oil separator being able to include augers having different flight configurations;
FIG. 12 is a perspective view of the modular oil separator shown fixed to an oil separation cover of the cam cover assembly of FIG. 11;
FIG. 13 is a partial perspective view of a cam cover of the cam cover assembly of FIG. 11 illustrating an attachment region of the cam cover configured for attachment of the modular oil separator thereto;
FIG. 14 is a view similar to FIG. 13 showing the modular oil separator shown fixed to the attachment region of the cam cover;
FIG. 14A is a cross-sectional view taken generally along the line 14A-14A of FIG. 14;
FIG. 14B is a cross-sectional view taken generally along the line 14B-14B of FIG. 14 with a valve head of the modular oil separator shown in an open position;
FIG. 15 is a partial cross-sectional perspective view of the modular oil separator taken through a valve plunger and spring of the modular oil separator;
FIG. 15A is a plan view of the modular oil separator of FIG. 15;
FIG. 16 is a partial cross-sectional perspective view of the modular oil separator taken generally through line 16-16 in FIG. 15 of an end cap and the valve plunger of the modular oil separator;
FIG. 16A is a plan view of the modular oil separator of FIG. 16;
FIG. 17 is a cross-sectional perspective view of the modular oil separator taken through a central longitudinal axis of the valve plunger with the valve head shown in a closed position;
FIG. 17A is a view similar to FIG. 17 with the cross-section being taken in laterally offset relation from the central longitudinal axis;

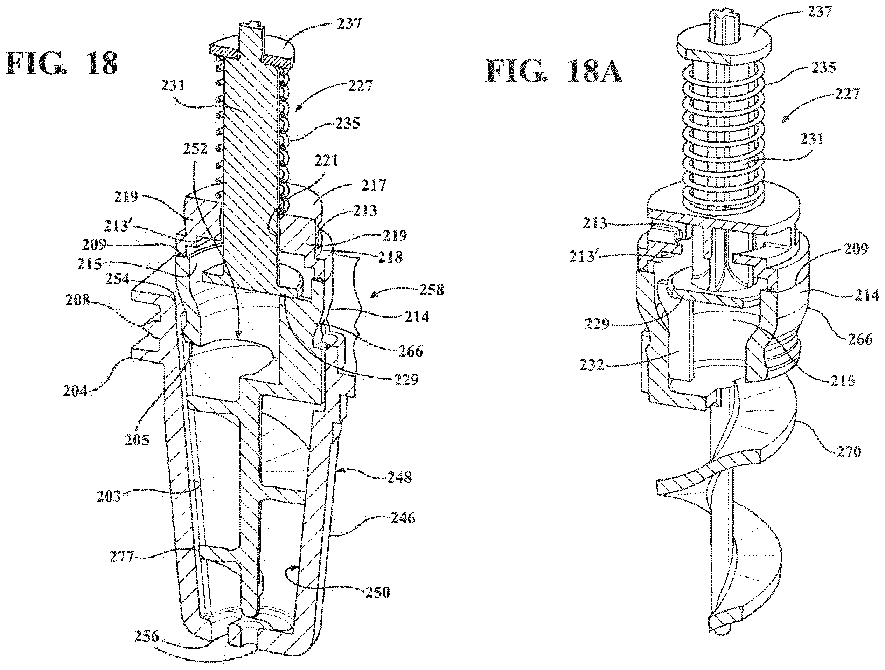

FIG. 18 is a view similar to FIG. 17 with the valve head shown in an open position; and
FIG. 18A is a view similar to FIG. 18 with the cross-section being taken in laterally offset relation from the central longitudinal axis.

### DESCRIPTION OF THE EXEMPLARY EMBODIMENTS

Example embodiments will now be described more fully with reference to the accompanying drawings. Each of the example embodiments is directed to an oil separator for separating oil from oil-laden gases. The example embodiments only are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

In general, the present disclosure is directed to one or more embodiments of an oil separator of the type well-suited for separating oil from oil-laden gases. The oil separator may be utilized to separate oil from gases of various devices such as, but not limited to, internal combustion engines of motor vehicles and refrigeration systems.

The oil separator in accordance with one aspect of the present disclosure includes a housing defining a chamber. A partition assembly is disposed in the chamber and divides the chamber into an entry segment and an exit segment. The entry segment defines an inlet that extends into the chamber for receiving oil-laden gases, and the exit segment defines an outlet that extends into the chamber for expelling gases.

The partition assembly includes a plurality of channels that each extend between a first opening in the entry segment and a second opening in the exit segment for passing the oil-laden gases between the entry and exit segments. A plurality of spiral members are each disposed in one of the channels. Each of the spiral members define a helical flow path for guiding the oil-laden gases in the helical flow path about the spiral member during passing of the oil-laden gases through the channels to separate the oil from the oil-laden gases.

According to an aspect of the disclosure, at least one valve can be connected to at least one of the openings of the channels. The stated valve is moveable between an open and closed position in response to a predetermined pressure being applied against the valve for maintaining the velocity of the oil-laden gases passing through the channels within a predetermined range.

According to another aspect of the disclosure, the oil separator further includes a fine mist separator assembly that includes a fibrous pad disposed in the exit chamber adjacent to and in alignment with the second openings for absorbing oil in the oil-laden gases immediately after the oil-laden gases have passed through the frames.

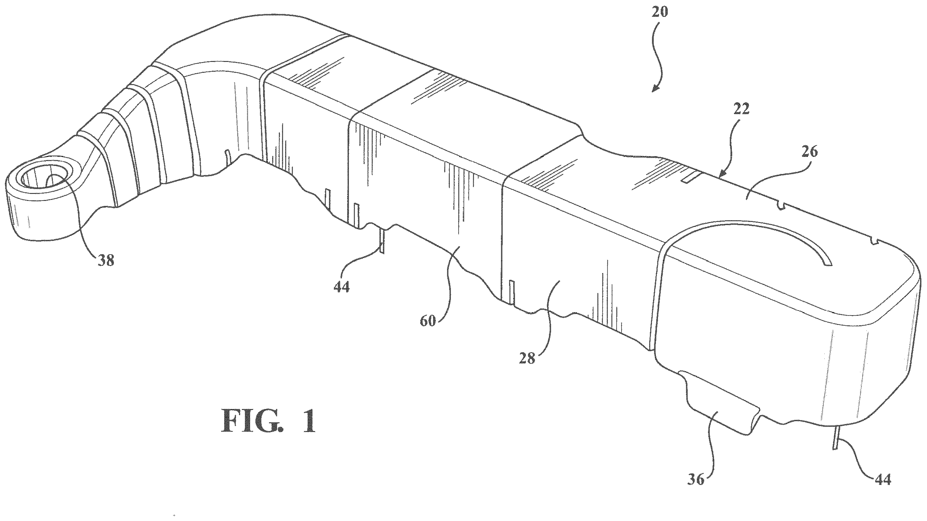

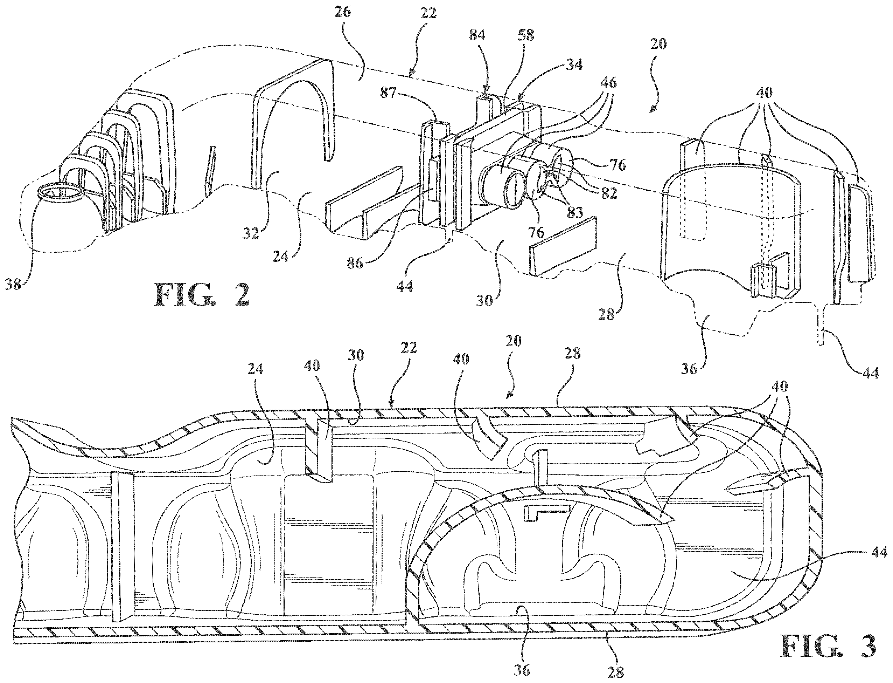

With specific reference to the figures, an exemplary embodiment of an oil separator **20** is generally shown. The exemplary embodiment of the oil separator **20** is described in operable connection with an internal combustion engine of a vehicle, however, it should be appreciated that the oil separator **20** could also be connected to other systems, e.g., a refrigeration system. With specific reference to FIGS. 1 and 2, the oil separator **20** includes a housing **22** that has a base **24,** a top **26** and a pair of sidewalls **28** and defines a chamber **30, 32.** A partition assembly **34** is disposed in the chamber **30, 32** and divides the housing **22** into an entry segment **30** and an exit segment 32. The entry segment **30** defines an inlet **36** that extends into the chamber **30, 32** for receiving oil-laden gases from the crank-case of the combustion engine into the chamber **30, 32.** The exit segment **32** defines a gas outlet **38** that extends into the chamber **30, 32** for expelling gases from the chamber **30, 32** to an air intake assembly of the combustion engine.

A plurality of baffles **40** are disposed in the chamber **30, 32** in the entry segment **30** between the inlet **36** and the partition assembly **34.** Each of the baffles **40** extend between the base **24** and the top **26** to define a labyrinth passage for guiding the oil-laden gases after the oil-laden gases have entered the chamber **30, 32** through the inlet **36.** In operation, the baffles **40** separate the oil from the oil-laden gases during contact of the oil-laden gases with the baffles **40.** At least one of the plurality of baffles **40** can be a "fish hook" style baffle that extends from the sidewall **28** in an arc shape over the inlet **36** which is particularly utilized to isolate splashing liquid oil that may be present during immediate entry of the oil-laden gases through the inlet **36.** Further, at least one of the plurality of baffles **40** extends linearly from the sidewall **28.** It should be appreciated that the shapes and positions of the baffles **40** provide for a swirling shape of the oil-laden gases passing through the labyrinth passage which aids in causing contact between oil particles and the baffles **40.**

The base **24** of the housing **22** defines at least one oil outlet **44** in the chamber **30, 32** for expelling the oil that has been separated from the oil-laden gases of the crank-case into an oil pan of the combustion engine. In the exemplary embodiment, a plurality of oil outlets **44** are provided with at least one in each of the entry and exit segments **30, 32** of the chamber **30, 32,** however, it should be appreciated that any number of oil outlets **44** could be defined along the base **24.** It should further be appreciated that the base **24** may be sloped toward the oil outlets **44** to funnel the separated oil into the oil outlets **44.**

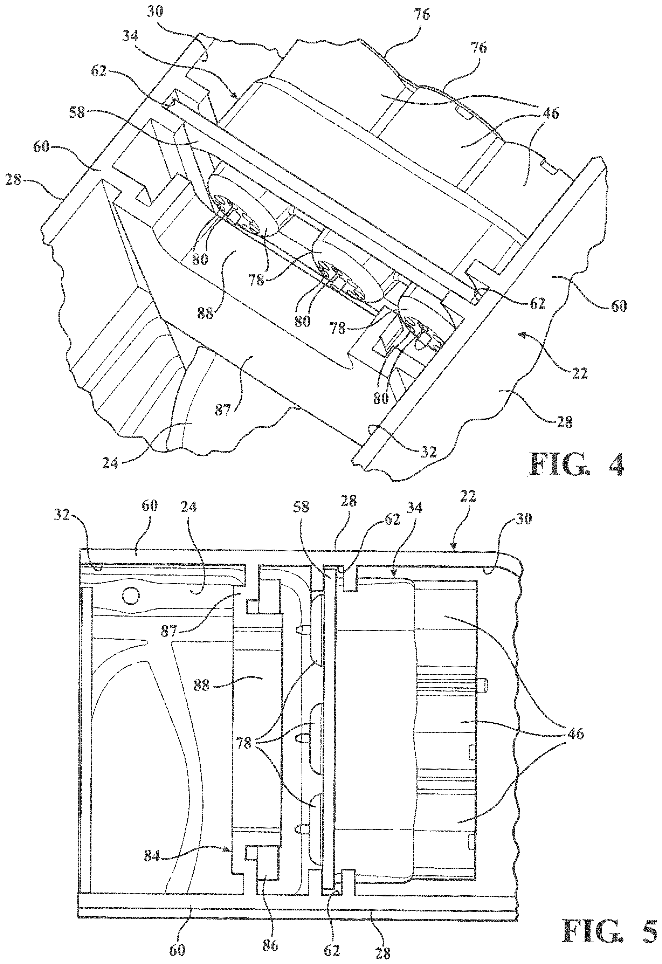

As best presented in FIGS. 4-8, the partition assembly **34** includes a plurality of generally tapered tube-shaped frames **46** that extend in parallel relationship with one another. In the exemplary embodiment, three frames **46** are utilized, however, it should be appreciated that more or fewer could be used. Each of the frames **46** presents an outer surface and an inner surface **50.** The inner surface **50** of each of the frames **46** defines a channel **52** that extends between a first opening **54** in the entry segment **30** and a second opening **56** in the exit segment **32** for passing the oil-laden gases between the entry segment **30** and the exit segment **32** after the oil laden gases have passed through the labyrinth passage **42.** A connecting member **58** connects the plurality of frames **46** to one another and interconnects the frames **46** to the housing **22.**

Each of the sidewalls **28** includes a modular segment **60** that is removeably connected to the base **24** and the remaining portion of the sidewall **28.** The modular segments **60** extend in spaced and parallel relationship with one another. A pair of slots **62** are defined by opposing modular segments **60** of the sidewalls **28** in the chamber **30, 32** and in alignment with one another. The slots **62** each receive an edge of the connecting member **58** to position the frames **46** in place. It should be appreciated that the modular construction of the modular segments **60** and connecting member **58** provide for simple and fast manufacturing steps in assembling the modular segments **60** and connecting member **58.**

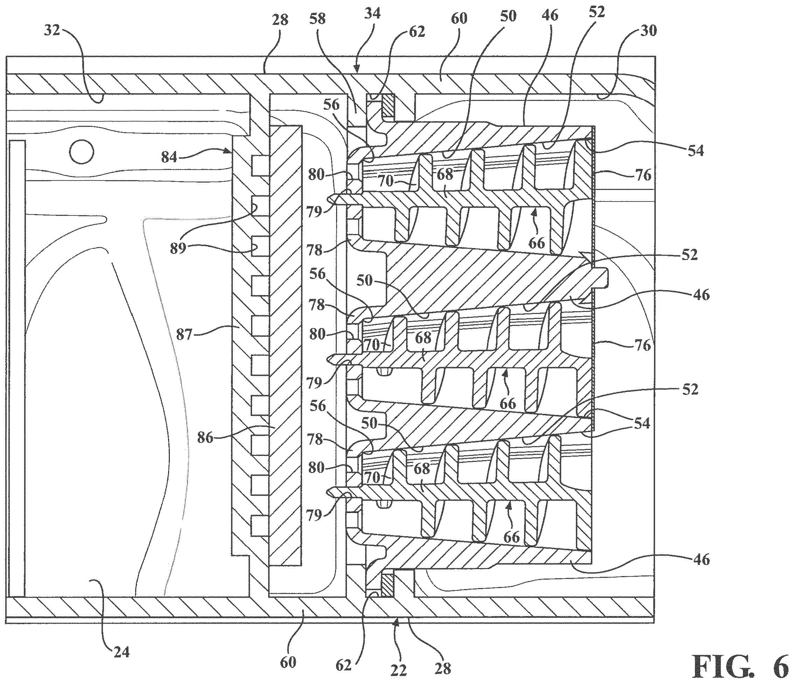

As best presented in FIGS. 6-9, a plurality of spiral members **66** are each disposed in one of the channels **52** of each of the frames **46.** Each of the spiral members **66** includes a shaft **68** and a flight **70.** The shaft **68** extends between a proximal end disposed adjacent to the first opening **54,** and a distal end disposed adjacent to the second opening **56.** The flight **70** extends in a spiral shape about the shaft **68** and defines a helical flow path for guiding the oil-laden gases during passing of the oil-laden gases through the channels **52** to further separate the oil from the oil-laden gases during contact of the oil-laden gases with the frame **46.** More specifically, centrifugal forces are produced as the oil-laden gases pass through the helical flow path, which forces small oil droplets to coalesce into larger droplets on the inner surface **50** of the frame **46.** After the droplets have coalesced, gravity causes them to flow toward the oil outlets **44** in their liquid state.

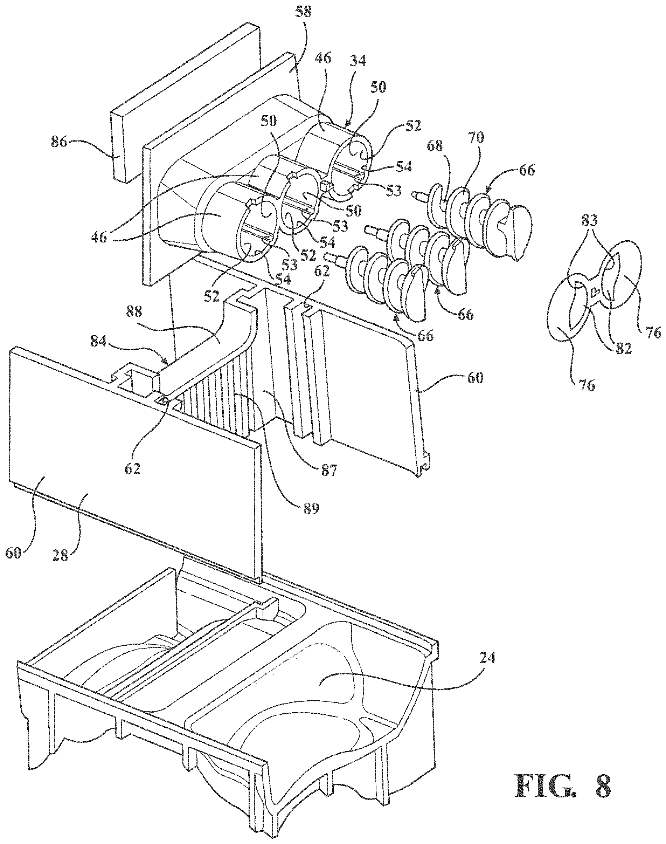

As best shown in FIG. 8, the inner surface **50** of each of the frames **46** defines an oil indentation **53** that extends linearly between the first opening **54** and the second opening **56** for passing the oil that has been separated from the oil-laden gases by the channel **52** axially toward the at least one oil outlet **44** in the entry segment **30** of the housing **22.** Further, the frames **46** extend parallel to the base **24,** and the inner surface **50** of each of the frames **46** has a generally frustoconical shape with the first opening **54** having a larger diameter than the second opening **56** for passing the oil that has been separated from the oil-laden gases at a downward angle via the oil indentation **53** into the entry segment **30** to further aid in removing separated oil from channels **52.**

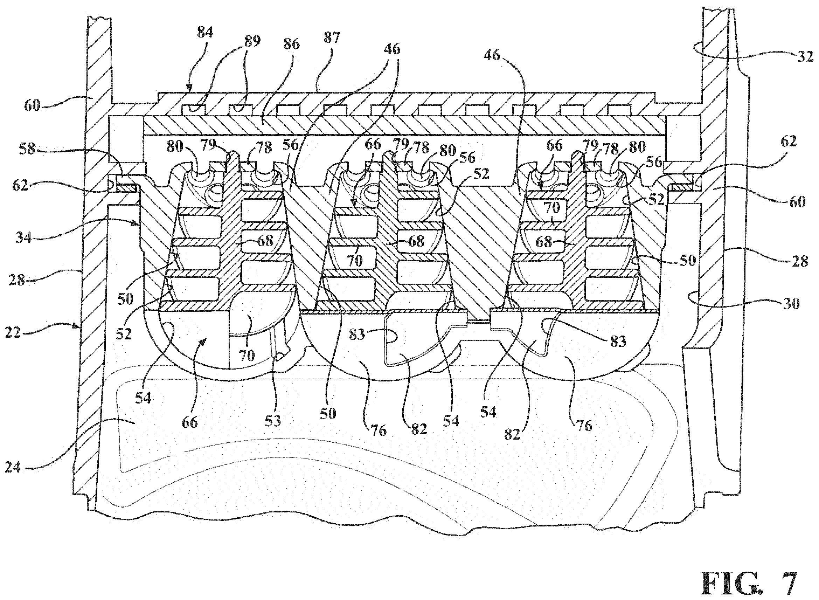

As best presented in FIGS. 7-9, a plurality of upstream plates **76, 176** each cover over one of the first openings **54** of the frames **46** and a plurality of downstream plates **78** each cover over one of the second openings **56** of the frames **46.** Each of the downstream plates **78** defines a central hole **79** that can receive the distal end of the shaft **68** of one of the spiral members **66** for securing the member to the downstream plates **78.** It should be appreciated that the distal end of the shaft **68** could be connected to the downstream plates **78** in other ways. Each of the downstream plates **78** further defines a plurality of nozzle holes **80** that are disposed circumferentially about the center hole **79** for guiding the oil-laden gases therethrough after the oil-laden gases have passed through the helical path defined by the spiral member **66.** It should be appreciated that the proximate location of the nozzle holes **80** near the end of the helical flow path causes the gases to flow through only a portion of the nozzles due to the shape of the flow path of the gases provided by the helical flow path. This causes the nozzle holes **80** to operate "artificially small", i.e., the area through which the gases pass through the nozzle holes **80** is smaller than the total area of the nozzle holes **80,** thereby allowing the nozzle holes **80** to be formed with relatively large diameters. This advantageously reduces the pressure drop between the entrance and exit segments **30, 32** of the chamber **30, 32,** allowing oil to more easily escape from the oil outlets 44.

At least one valve **82, 182** is connected to at least one of the openings **54, 56** of the channels **52.** The valves **82, 182** are moveable between an open and closed position in response to a predetermined pressure being applied against the valve **82, 182.** The predetermined pressure is provided as a result of the pressure difference between the entrance and exit segments **30, 32** of the chamber **30, 32,** which correlates with the quantity of crankcase gases produced per unit time. To maximize the amount of oil that is separated by the helical flow path, it is desirable to maintain a relatively high velocity of the oil-laden gases passing therethrough while optimizing the surface of area of the inner walls of the channels **52** that the gases are exposed to, thereby increasing the amount of oil that coalesces against the inner surface **50** of the frame **46.** It is understood that the flow rate of the oil-laden gases inside the helical flow path depends on the quantity of the oil-laden gases produced by unit time by the engine per unit time and on the flow cross-section of the helical flow path. Thus, the moveable valves **82, 182** ensure that the gases flow through the channels **52** within a predetermined velocity range as the quantity of the oil-laden gases produced per unit time varies. More specifically, when the quantity of oil-laden gases decreases, the valves **82, 182** are biased closed, and when the quantity of oil-laden gases increases, the valves **82, 182** are forced open.

In the exemplary embodiments, two valves **82, 182** are provided, each over one of the first openings **54,** thereby leaving one of the first openings **54** open at all times. It should be appreciated that more or fewer valves **82, 182** could be utilized. The plurality of valves **82, 182** are each biased in a closed position, and moveable to an open position for opening the first opening **54** in response the predetermined pressure being applied. More specifically, the valves **82, 182** move inwardly in response to the predetermined pressures being applied. In order to provide the inward bending movement, the valves **82** could be made of various flexible materials or could be biased shut by way of one or more biasing mechanisms, including, but not limited to, a spring.

According to a first embodiment of the upstream plates **76** and valves **82** best illustrated in FIGs. 7 and 8, each of the upstream plates **76** defines a mouth **83** that extends into the channel **52.** The plurality of valves **82** are each flexibly and pivotally connected to one of the upstream plates **76** along an edge of each of the valves **82.** The valves **82** each overlie one of the mouths **83** and are shaped and sized substantially the same as the mouth **83** which they overlie such that they close the mouths **83** while in the closed position and may flex into the channel **52** toward the open position in response to the predetermined pressure being applied.

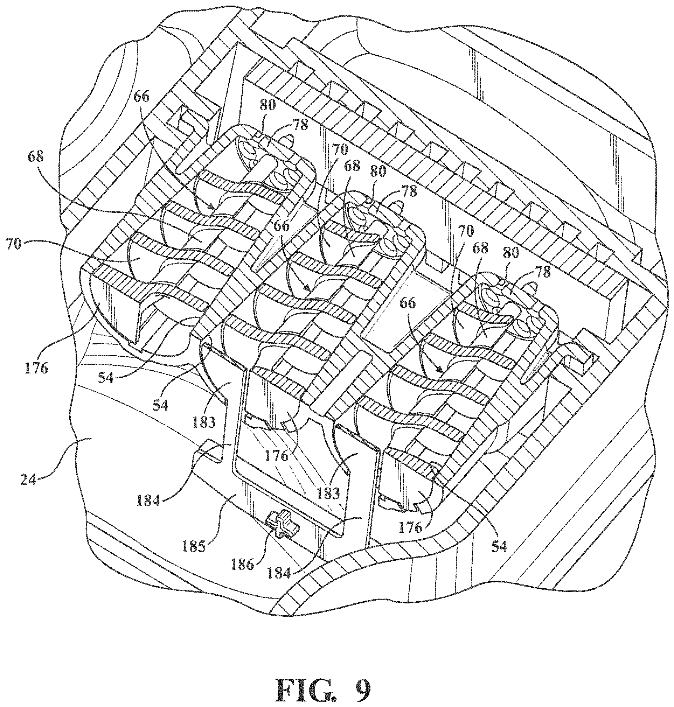

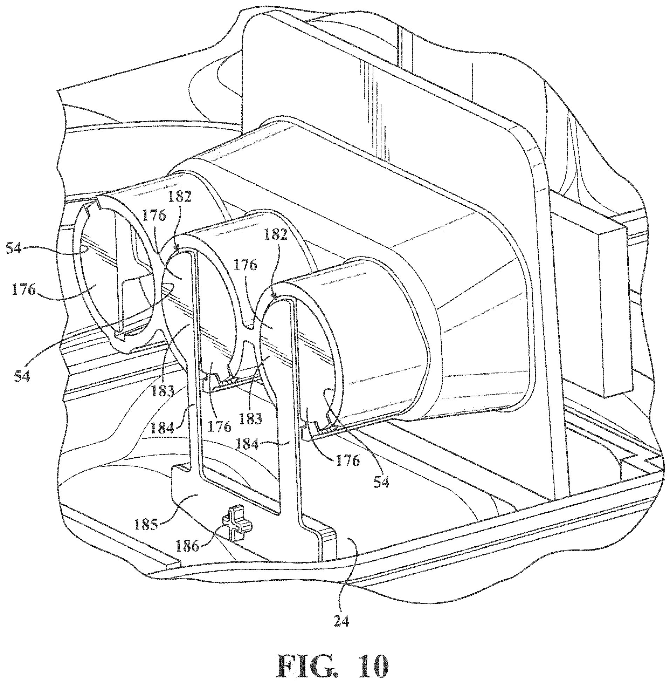

According to a second embodiment of the upstream plates **176** and valves **182** illustrated in FIGs. 9 and 10, the upstream plates **176** are each integrally part of one of the spiral members **70.** Furthermore, a mouth **183** into the opening **54** is defined between each of the upstream plates **176** and the inner surface **50** of the frame **46.** The plurality of valves **182** each have a face portion **183** that is shaped substantially the same as a mouth **183** which they overlie such that they close the mouth **183** while in the closed position. Each of the valves **182** further includes a neck portion **184** that extends downwardly from the face portion **183.** The neck portions **184** are each connected to a cross-member portion **185** that extends generally transversely to the neck portion **184** and interconnects the neck portions **184.** The neck portion **184** of each of the valves **182** is flexibly and pivotally connected to the cross-member portion **185** such that the neck portion **184** may move into the channel **52** toward the open position in response to the predetermined pressure being applied. A fastener **186** connects the cross-member portion **185** to the base **24** of the housing **22.** It should be appreciated that various types of fasteners may be utilized including, but not limited to, bolts and screws. Furthermore, the width, thickness and material of the neck portions **184** may vary to adjust the pressure required to move the neck portions **184** to open the channels **52.**

As illustrated in the figures, each mouth **83, 183** is sized differently than the mouths **83, 183** positioned adjacent thereto such that opening the valves **82, 182** may be staged depending on the quantity of crankcase gasses produced per unit time, thereby optimizing the separation efficiency of the oil separator **20.** It is understood that separated efficiency means the amount of oil that is extracted from the oil-laden gasses. Therefore, the valves **82, 182** may be opened to complement the helical flow path that corresponds with the first opening **54** that is always opened. Varying the predetermined pressure may be accomplished by constructing the valves **82, 182** of flexible materials that have different spring constants from one another or utilizing springs that have different spring constants.

As best presented in FIGS. 2 and 4-8, a fine mist separator assembly **84** is disposed in the exit chamber **30, 32** for further separating oil from the oil-laden gases after the oil-laden gases have passed through the frames **46.** The fine mist separator assembly **84** includes a generally rectangular-shaped fibrous pad **86** that is porous and disposed adjacent to and in alignment with the second openings **56** of the frames **46** for further absorbing oil in the oil-laden gases to further separate oil from the oil-laden gases. In the exemplary embodiment, the fibrous pad **86** is made of a nonwoven nylon felt material, however, it should be appreciated that other materials could be utilized without departing from the scope of the subject disclosure. Additionally, the fibrous pad **86** could have other shapes, e.g., a triangular shape.

The fine mist separator assembly **84** also includes a generally rectangular-shaped impactor wall **87** that is disposed adjacent to the fibrous pad **86** between the sidewalls **28.** The impactor wall **87** defines a plurality of indentations **89** that extend downwardly toward the base **24** for further separating the oil from the oil-laden gases during contact of the oil-laden gases with the impactor wall **87,** and for directing the separated oil toward the base **24.** The impactor wall **87** extends between the modular segments **60** of the sidewalls **28.** The impactor wall **87** also includes a flange **88** that extends parallel to the base **24** over the fibrous pad **86** for limiting upward movement of the fibrous pad **86** to secure the fibrous pad **86** adjacent to the second openings **56.** During operation, oil particles are separated from the gasses by the impactor wall **87** and are directed downwardly by the indentations **89.** Meanwhile, "clean" gases pass over the flange **88** into the exit segment **32** of the chamber **30, 32** toward the gas outlets **38.** It should be appreciated that the fine mist separator assembly **84** could be configured without the fibrous pad **86,** causing the oil-laden gases to collide with the impactor wall **87** without passing through the fibrous pad **86.**

According to an aspect of the disclosure, one or more passages could be defined by the partition assembly for allowing oil that has been separated by the fibrous pad **86** and / or impactor wall **87** to pass between the entry and exit segments **30, 32** of the chamber **30, 32.** The passages could be defined between the base **24** and sidewalls **28.**

A plurality of lower walls **90** extend upwardly from the base **24** in the entry and exit segments **30, 32** for further separating oil from the oil-laden gases during contact of the oil-laden gases with the lower walls **90,** and to limit the velocity of the oil-laden gases moving adjacent to the base **24.** Each of the lower walls **90** extend between the sidewalls **28** and are spaced from the top **26.** Furthermore, a plurality of arches **92** are disposed in the exit segment **32** near the outlet **38** for further separating oil from the oil-laden gases during contact of the oil-laden gases with the arches **92** and to limit the velocity of the oil-laden gases moving adjacent to the top **26.** Thus, the lower walls **90** and arches **92** each provide for a "dead area" in their respective segments **30, 32** of the chamber **30, 32** that promotes settling of the oil-laden gases to allow separated oil to drain through the oil outlets **44.**

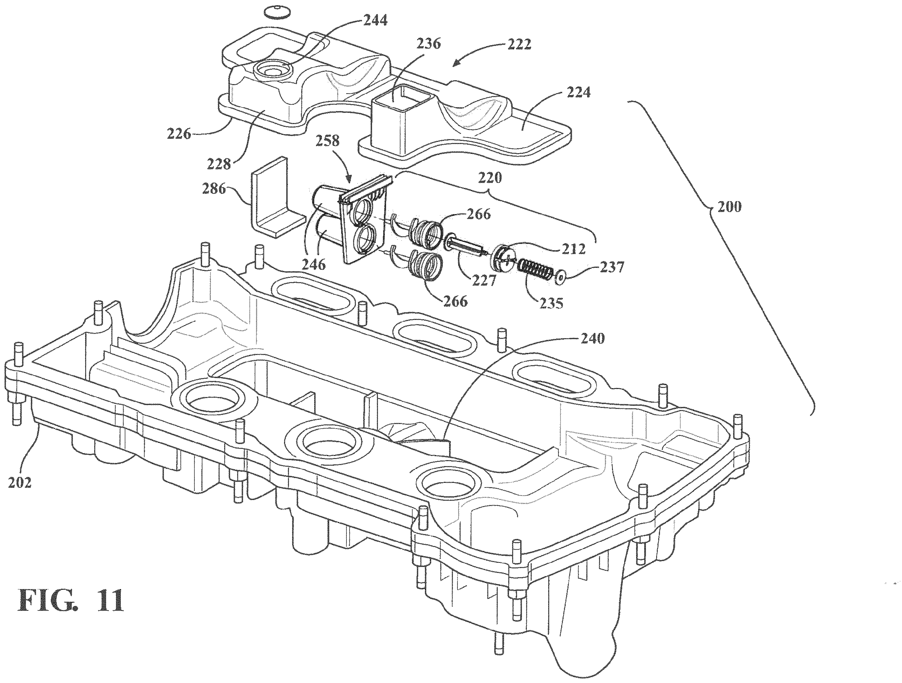

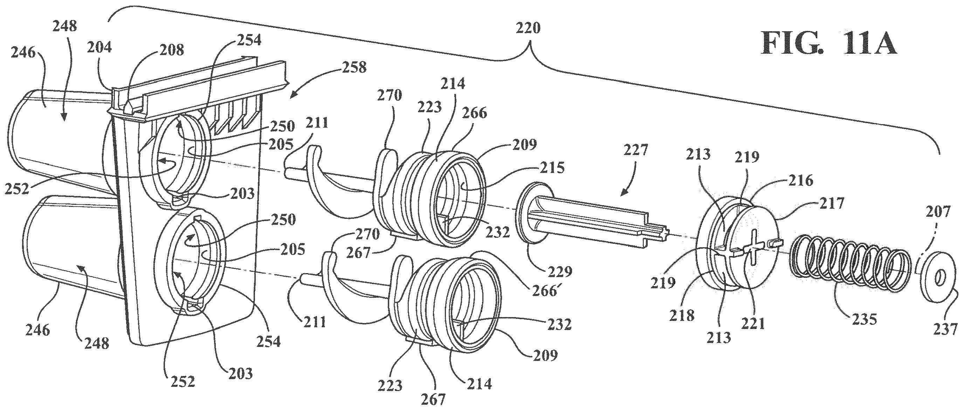

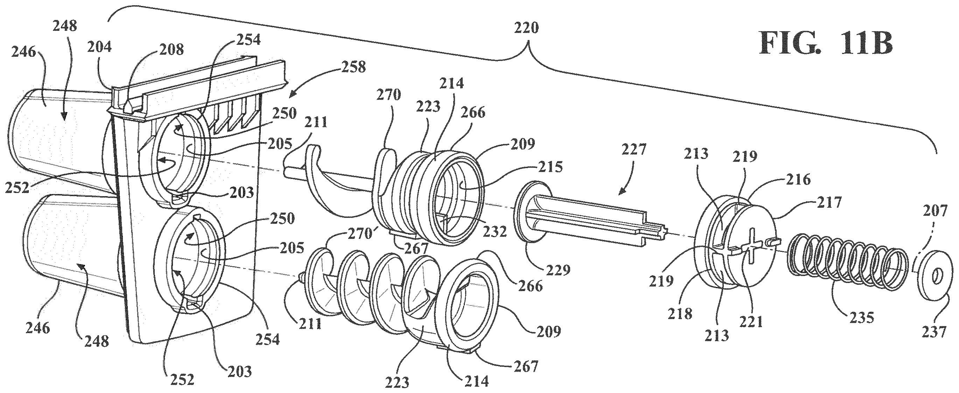

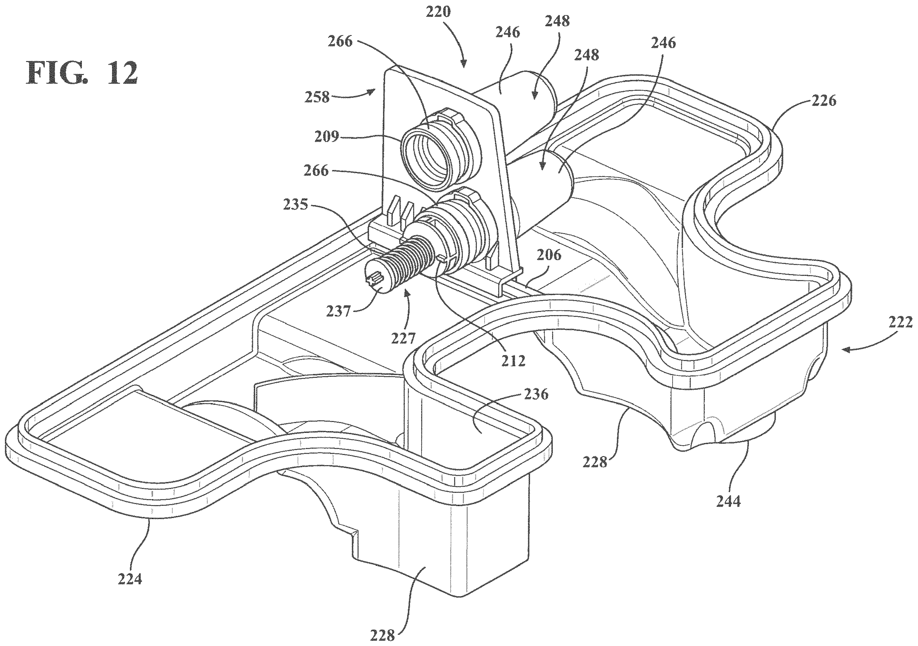

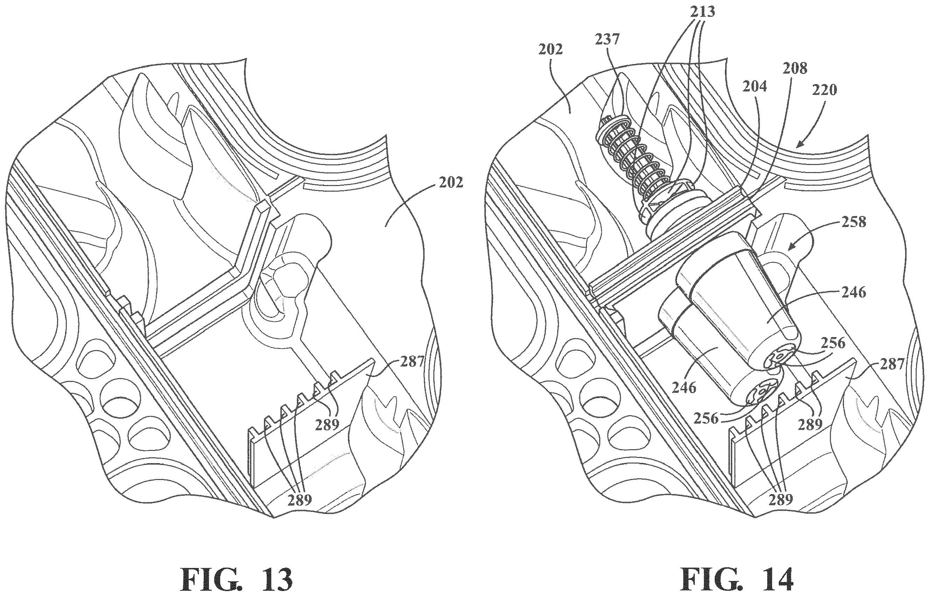

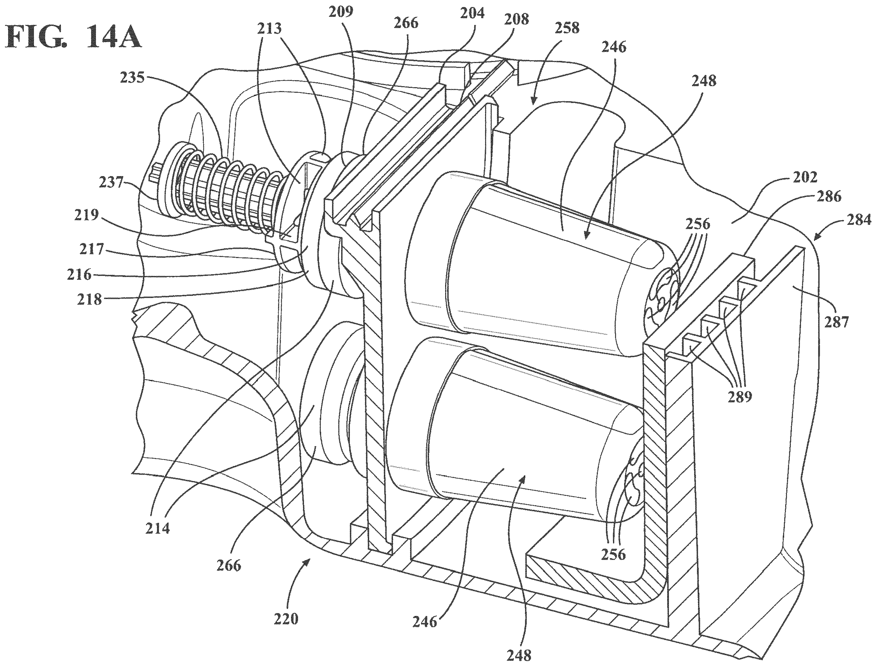

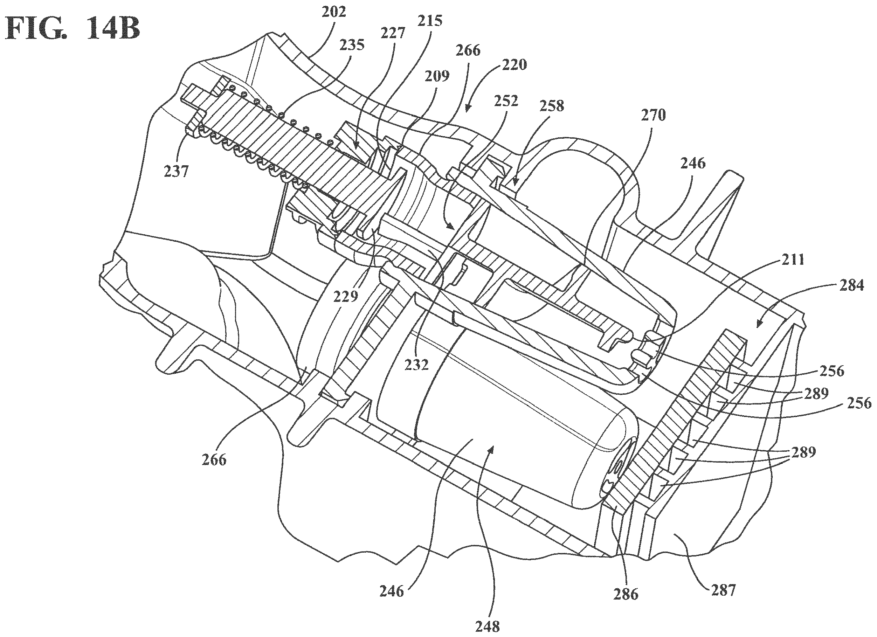

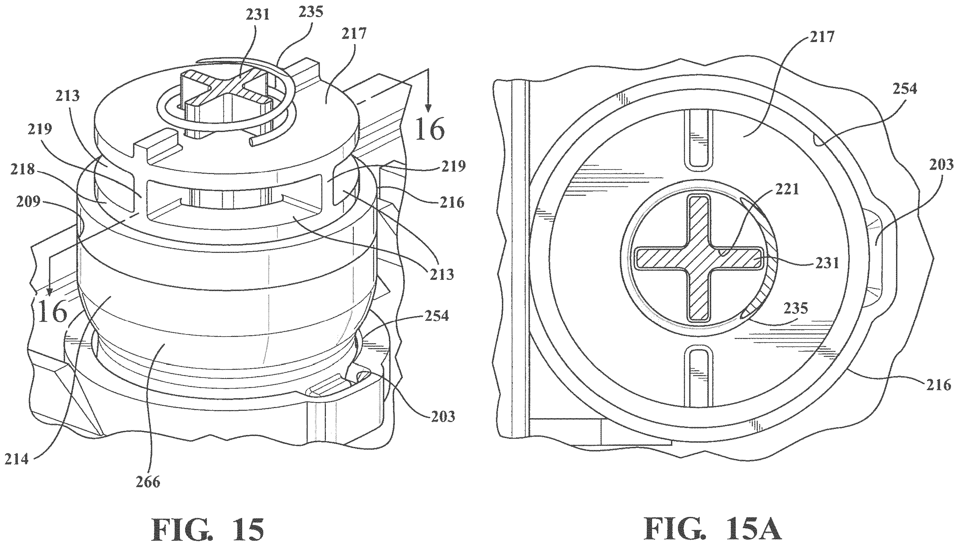

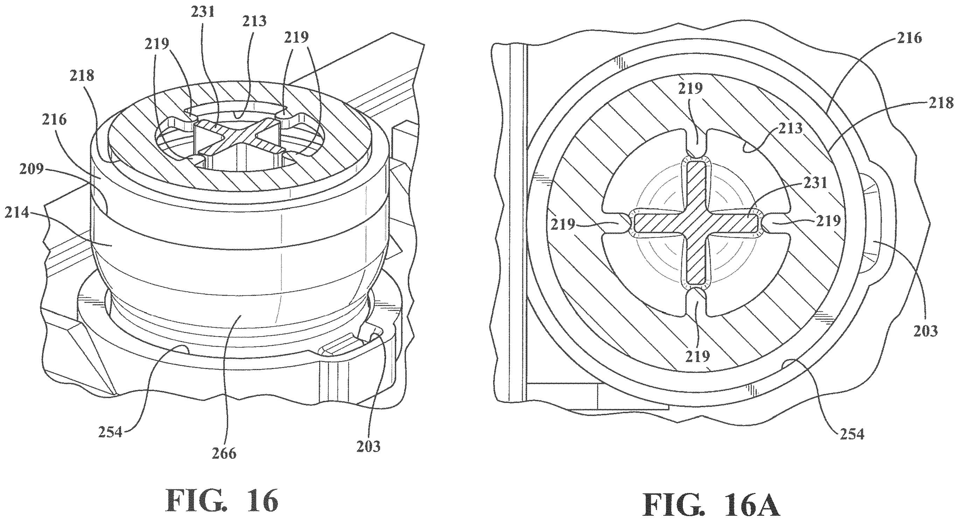

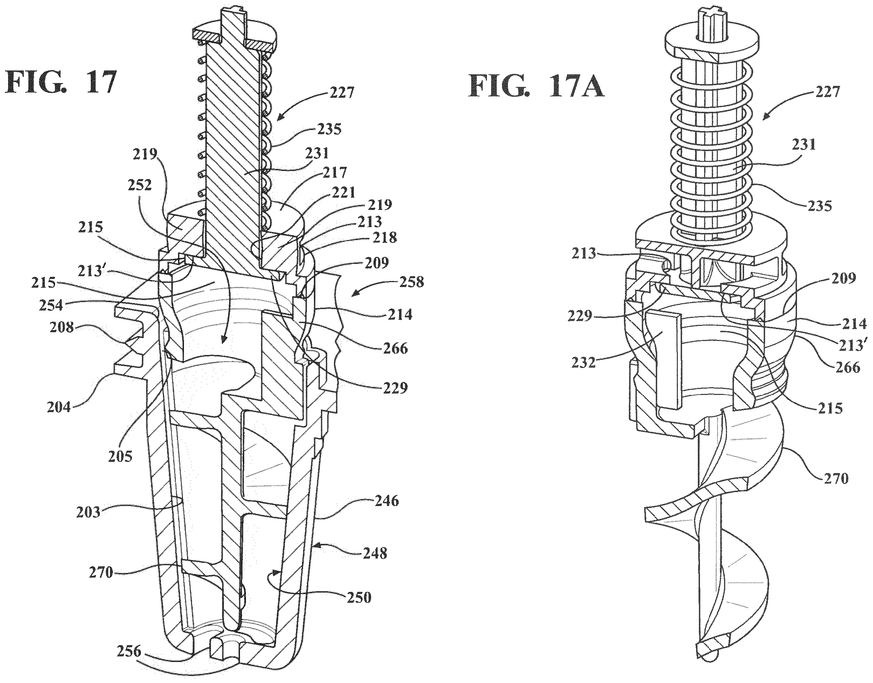

In accordance with another aspect of the disclosure, with specific reference to the FIGS. 11-12, and 14-17, an exemplary embodiment of another oil separator **220** is generally shown, wherein the same reference numerals as used above, offset by a factor of **200,** are used to identify like features. The exemplary embodiment of the oil separator **220** is described in operable connection with an internal combustion engine of a vehicle, and is shown in a non-limiting embodiment as be disposed in a cam cover assembly **200** however, it should be appreciated that the oil separator **220** could also be incorporated within other vehicle engine components, such as a crank case, as discussed above, or within other systems, e.g., a refrigeration system. With specific reference to FIGS. 11 and 12, the oil separator **220** is disposed between an oil separator cover, also referred to as housing **222** that has a base **224,** a top **226** and sidewalls **228.** The sidewalls **228** define an inlet **236,** that extends into a chamber for receiving oil-laden gases, and an oil outlet **244,** that allows oil to flow freely therethrough under the force of gravity from the chamber back to an oil sump of the internal combustion engine, whereas the remaining gases are free to be expelled through a cam cover **202** of the assembly **220,** such as via a standard gas recirculation valve (not shown, but known in the art).

At least one or a plurality of baffles **240** can be disposed in the chamber bounded by the housing **222** and cam cover **202,** such as adjacent the inlet **236**. The baffles **240** can extend between the base **224** and the top **226,** such as from the base **224**, sidewalls **228** and/or top **226**, to define a labyrinth passage for guiding the oil-laden gases after the oil-laden gases have entered the chamber through the inlet **236**. In application and operation, the baffles **240** can be configured as discussed above for the baffles 4**0**, and thus, no further discussion is believed necessary.

As best shown in FIGS. 11A, 11B, 12, 14-14B, the oil separator **220** includes a housing **258** having a plurality of generally tapered tube-shaped receptacles, also referred to as frames **246**, that extend in laterally spaced, parallel relationship with one another. Each of the frames **246** are configured for receipt of a spiral member, also referred to as auger **266**, therein. In the exemplary embodiment, two frames **246** are shown; however, it should be appreciated that more could be included. Each of the frames **246** presents an outer surface **248** and an inner surface **250**. The inner surface **2**5**0** of each of the frames **246** bounds a channel, also referred to as cavity **252,** shown as being frustroconical in shape, that extends between an inlet, also referred to as first opening **254**, and an outlet, also referred to as second opening **256.** The inner surface **250** is shown in a non-limiting embodiment as having a groove or channel **203** extending from the inlet **254** toward the outlet **256**, wherein the channel **203** receives a mating protrusion **267** extending radially outwardly from the respective auger **266** to essentially close off the channel 2**03** adjacent the inlet **254** against a backflow of oil, wherein the channel **203** functions to drain coalesced oil toward and through the outlet **256**, as discussed further below. The inner surface **250** is further shown as having one of a protrusion or recess, shown in a non-limiting embodiment as having a recess in the form of an annular groove **205** extending therein adjacent the inlet **254**. The annular grooves **205** facilitate fixation of the augers **266** in the respective cavities **252** of the frames **246**. The housing **258** is preferably formed as a monolithic piece of material, such as in a molding operation, by way of example and without limitation, and thus, the plurality of frames **246** are formed as a monolithic piece of material with the housing **258**. Of course, it is contemplated that the housing 2**58** and the frames **246** could be otherwise fixed to one another as separate pieces of material.

The housing **258** is configured to be fixed between the cam cover **202** and the oil separator cover **222**, and in one non-limiting embodiment, the housing **258** is configured to be fixed to the oil separator cover **222**, such as in a gluing or welding operation, by way of example and without limitation, whereupon the integral subassembly of the oil separator cover **222** and the oil separator **220** can then be assembled to the cam cover **202.** To facilitate fixation of the housing **258** to the oil separator cover **222,** the housing **258** can be provided having a generally U-shaped channel **204** sized for close or snug receipt of a flange **206** of the oil separator cover **222** therein. To further facilitate fixation of the oil separator cover **222** to the housing **258,** a rib **208** of material, shown as being a rib of oil separator cover material within the channel **204** can be provided, wherein the rib **208** of material can be subsequently melted in a welding operation to permanently fix the oil separator cover **222** to the housing **258.** Of course, it is to be recognized that the channel **204** and rib **208** could be reversed to be on opposite parts, or that they could configured differently than shown.

The augers **266** each have a helical flight **270** extending about a longitudinal central axis **207** between a proximal end, also referred to as an inlet end **209,** and a distal end, also referred to as an outlet end **211.** Each of the augers **266** is disposed in a separate one of the cavities **252** to form helical flow paths about the associated central longitudinal axis **207.** As shown in a non-limiting embodiment of FIG. 11A, the augers **266** can each be formed having the same configuration as one another, including the flights **270** having the same helical pitch and otherwise, or, as shown in another non-limiting embodiment of FIG. 11B, at least some of the augers **266, 266'** can be formed having a different configuration from one another, wherein the flights **270, 270'** of the respective augers **266, 266'** can have a different helical pitch from one another, with other differences also being possible, with at least some shown and discussed hereafter.

In accordance with one non-limiting embodiment, the augers **266,** as shown in FIG. 11A, include one auger **266** having its inlet end **209** left uncovered and open, thereby being freely and continuously exposed and open to flow of oil-laden gas therethrough during all vehicle operating conditions, and one auger **266** having an end wall or cover, also referred to as end cap **212** thereon. Accordingly, if oil-laden gas is present and flowing toward the inlet ends **209,** the oil-laden gas is unobstructed and free to flow into the cavity **252** and around the uncovered auger **266.** On the other hand, the auger **266** having the end cap **212** is predisposed to preventing the flow of the oil-laden gas into the cavity **252** and around the auger **266** under relatively low flow rate, low pressure conditions, such as when the vehicle is idling or otherwise operating in a low demand condition. Then, upon the flow rate and pressure increasing relative to the low flow rate, low pressure conditions, such as during vehicle acceleration, for example, as will be understood by one skilled in the art, an inlet **213** in the end cap **212** is automatically opened to the flow of oil-laden gas therethrough, such that the oil-laden gas can flow through the inlet **213** and about the additional auger **266** to further facilitate the efficient separation of oil mist from the gases.

The end cap **212** is shown as being fixed to the inlet end **209** of the auger **266,** wherein the inlet end **209** is presented at a free end of an annular wall **214** which extends from the inlet end **209** about the longitudinal central axis **207** toward the helical flight **270** to bound an inlet chamber **215** of the auger **266.** The end cap **212** has an annular outer periphery **216** extending between an upper wall **217** and a lower wall **218,** with a plurality of webs **219** extending between the upper and lower walls **217, 218.** A through opening **221** extends along the longitudinal central axis **207** through the upper and lower walls **217, 219** and the inlet **213** extends into the outer periphery **216** between the webs **219** and through the lower wall **218.** As such, the through opening **221** and the inlet **213** merge with one another through the lower wall **218.**

To facilitate modular assembly, as mentioned above, the augers **266, 266'** have one of a protrusion or a recess, shown in a non-limiting embodiment as a protrusion **223** configured for snapping receipt in the corresponding recess **205** in the inner surface **250** of the frames **246.** The protrusion **223** is shown as an annular rib **223** configured for snapping receipt in the annular groove **205.** Accordingly, the augers **266, 266'** are interchangeable with one another during assembly, and thus, the oil separator **220** can be configured as desired, having augers **266** with helical flights **270** having the same pitch, or having augers **266, 266'** with different helical pitches. The augers **266** having a larger helical pitch reduce the pressure drop between the inlet end **209** and outlet end **211** and provide an increased velocity of the gases through the cavity **252,** while the augers **266'** having a smaller helical pitch increase the centripetal force of the oil-laden gases, thereby facilitating separation of the oil droplets for the oil-laden gases at reduced flow rate operating conditions. Accordingly, a predetermined matching of the augers **266, 266'** results in an optimal, efficient operation of the oil separator **220.**

The oil separator **220** includes a plunger valve **227** having a valve head 229 disposed in the inlet chamber **215.** The valve head **229** is configured to move automatically into and out of sealed relation with a valve seat **213'** at the inlet **213** in response to varying operating conditions. As discussed above, under relatively low flow rate, low pressure conditions, the valve head **229** remains in a sealed relation with the valve seat **213'** at the inlet **213,** and then, upon the flow rate and pressure increasing relative to the low flow rate, low pressure conditions, such as during vehicle acceleration, the valve head **229** moves out from sealed engagement with the valve seat **213'** at the inlet **213,** and if the flow rate of the oil-laden gas is sufficient to fully open the plunger valve **227,** the valve head **229** moves into engagement with a valve head stop surface **232,** shown as a protrusion or rib projecting radially inwardly from the annular wall **214** of the auger **266** such that the stop surface **232** confronts the valve head **229** to limit the movement of the valve head **229** within the inlet chamber **215** away from the end cap **212** to provide a maximum flow through configuration.

The plunger valve **227** has a valve stem **231** extending from the valve head **229** along the longitudinal central axis **207** through the through opening **221** in the upper wall **217.** The valve stem **231** includes at least a portion, and is shown in its entirety as having a non-circular outer peripheral surface **233,** as viewed in cross-section taken transversely to the longitudinal central axis **207.** With the through opening **221** in the upper wall **217** having a peripheral surface conforming at least in part, and shown in its entirety, with the non-circular outer peripheral surface **233** of the valve stem **231,** lateral play of the valve stem **231** within the through opening **221** in the upper wall **217** is inhibited. The lateral cross-sectional shape of the outer peripheral surface **233** is generally cross or X-shaped with a corresponding shape being provided by the periphery of the through opening **221.** On the other hand, the periphery of the through opening **221** corresponding with the inlet **213** in the lower wall **218** is enlarged relative to the outer peripheral surface **233** of the valve stem **231** to allow the free flow of gases through the inlet **213** upon the valve head **229** being biased to the open position.

The oil separator **220** includes a spring member **235** configured to bias the valve head **229** into the closed position in sealed abutment with the end cap **212** to perfect a seal over the inlet **213** to inhibit the flow of oil-laden gases therethrough. The valve head **229** is moveable within the chamber **215** against the bias of the spring member **235** to an open position spaced axially away from the lower wall **218** of the end cap **212** in response to pressure being applied against the valve head **229** sufficient to overcome the bias of the spring member **235.** In accordance with one non-limiting the embodiment, the spring member **235** can be provided as a coil spring disposed about the valve stem **231.** To impart the bias on the plunger valve **227** to bias the valve head **229** upwardly into sealed abutment with the lower wall **218,** the spring member **235** is captured between the upper wall **217** of the end cap **212** and a retaining feature, shown as a retaining member **237** that is fixed to the valve stem **231**, such as via a heat-staked portion of the valve stem **231**, by way of example and without limitation. The retaining member **237** can be provided as a washer or the like, disposed on an end of the valve stem **231**, whereupon the end of the valve stem 231 can be heat-staked or other deformed to fix the retaining member **237** in the desired compressed position against a bias of the spring member **235.** As such, the compressive bias applied by the spring member **235** against the upper wall **217** and the retaining member **237** forces the valve head **229** into sealed relation about the inlet **213.** It will be appreciated and understood by one skilled in the art that the spring force of the spring member **235** can be selected as desired to allow the force required to move the valve head **229** out of sealed engagement about the inlet **213** to be precisely regulated.

A fine mist separator assembly **284** is disposed downstream of the outlet second openings **256** for further separating oil from the oil-laden gases after the oil-laden gases have passed through the frames **246,** as discussed above. The fine mist separator assembly **284** includes a generally rectangular-shaped fibrous pad **286** that is porous and disposed adjacent to and in alignment with the second openings **256** of the frames **246** for further absorbing oil in the oil-laden gases to further separate oil from the oil-laden gases. In the exemplary embodiment, the fibrous pad **286** can be made of a nonwoven nylon felt material, however, it should be appreciated that other materials could be utilized without departing from the scope of the subject disclosure, wherein the pad can be adhered, welded or otherwise fixed to the cover **202,** by way of example and without limitation.

The fine mist separator assembly **84** also includes a generally rectangular-shaped impactor wall **287** that is disposed adjacent to the fibrous pad **286.** The impactor wall **287** is shown as being formed as an integral, monolithic piece with the cover **202**, though it could be formed separately and attached thereto, if desired. The impactor wall **287** has a plurality of indentations **289** that further separate the oil from the oil-laden gases during contact of the oil-laden gases with the impactor wall **287**, and channel the separated oil toward the oil outlet **244.** Meanwhile, "clean," substantially oil-free gases pass over the impactor wall **287** toward a gas outlet. It should be appreciated that the fine mist separator assembly **284** could be configured otherwise, such as without the fibrous pad **286**, as discussed above.

In use, depending on the operating conditions of the vehicle, the valve head **229** will either remain in closed and sealed relation against the valve seat **213'** (i.e., under low flow conditions, such as at idle), thereby directing the entirety of the flow of oil-laden gasses through the uncovered auger(s) **266**, as discussed above, or the valve head **229** will move out of sealed relation from the valve seat **213'** to an open position (i.e., under relatively increased flow conditions, such as during acceleration or other high demand use conditions), thereby distributing the of the flow of oil-laden gasses through both the uncovered auger(s) **266** and the augers **266** including the plunger valve **227**. It will be readily appreciated by one skilled in the art that the opening and closing of the plunger valve **227** can be controlled by selecting a spring member **235** having the desired spring constant(s). Accordingly, if a plurality of the plunger valves **227** is provided in the assembly **200**, different ones of the plunger valves **227** can be provided having spring members **235** with different spring constants from one another, thereby causing the respective plunger valves **227** to open under different flow rates/pressures from one another, thus, providing optimal flow of the oil-laden gases through the oil separator **220** and maximizing the efficiency in which the oil is separated from the oil-laden gases. Further, as discussed above, the helical pitches of the different augers **266**, **266'** can be varied from one another as desired for the intended vehicle platform. Of course, as discussed above, at least one of the plurality of augers **266**, 266' can be provided not having a valve head **229** disposed therein, thereby being continuously open to the flow of oil-laden gases therethrough.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varies in many ways. The scope of the disclosure is defined by the appended claims.

## Claims

1. An oil separator for separating oil from oil-laden gases, comprising:
a housing (22, 222) having a plurality of cavities, each of said cavities extending between a proximal end and a distal end;
a plurality of augers (66, 266, 266'), each of said augers (66, 266, 266') having a helical flight extending about a longitudinal central axis (207) between an inlet end and an outlet end, said augers (66, 266, 266') being disposed in separate ones of said cavities to form helical flow paths about said longitudinal central axes (207);
**characterized in that**
at least one of said augers (66, 266, 266') has an annular wall (214) extending from said inlet end about said longitudinal central axis (207), said annular wall (214) bounding an inlet chamber (215);
an end cap (212) fixed to said annular wall (214) over said inlet chamber, said end cap having an inlet (213);
a plunger valve (227) having a valve head (229) disposed in said inlet chamber (215); and
a spring member (235) configured to bias said valve head (229) into a closed position in sealed abutment with said end cap (212) to perfect a seal over said inlet (213) to inhibit the flow of oil-laden gases therethrough, said valve head (229) being moveable within said inlet chamber (215) against the bias of said spring member (235) to an open position away from said end cap (212) in response to pressure being applied against said valve head (229) sufficient to overcome the bias of said spring member (235),
wherein said end cap (212) has a through opening (221) extending along said longitudinal central axis (207) and said plunger valve (227) has a valve stem (231) extending from said valve head (229) through said through opening (221).

2. The oil separator of claim 1, wherein said end cap (212) has an annular outer periphery (216) extending between upper and lower walls (217, 218), said through opening (221) extending through said upper and lower walls (217, 218) and said inlet (213) extending into said outer periphery (216) and through said lower wall (218).

3. The oil separator of claim 2, further including a plurality of webs (219) extending between said upper and lower walls (217, 218), said inlet (213) extending between said webs (219).

4. The oil separator of claim 2, wherein said valve stem (231) includes at least a portion having a non-circular outer peripheral surface, as viewed in cross-section taken transversely to said longitudinal central axis (207), with said through opening (221) in said upper wall (217) having a peripheral surface (233) conforming at least in part with said non-circular outer peripheral surface of said valve stem (231) to inhibit lateral play of said valve stem (231) within said through opening (221) in said upper wall (217).

5. The oil separator of claim 4, wherein said through opening (221) in said lower wall (218) has an enlarged peripheral surface relative to said valve stem (231) to form the portion of said inlet (213) extending through said lower wall (218) between said valve stem (231) and said enlarged peripheral surface of said through opening (221).

6. The oil separator of claim 1, wherein said spring member (235) is disposed about said valve stem (231).

7. The oil separator of claim 6, wherein said spring member (235) is a coil spring.

8. The oil separator of claim 7, further including a retaining member (237) fixed to said valve stem (231) and capturing said spring member (235) between said end cap (212) and said retaining member (237),
wherein said retaining member (237) preferably is fixed to said valve stem (231) via a heat staked portion of said valve stem (231).

9. The oil separator of claim 1, wherein at least some of said helical flights (70, 270, 270') have different helical pitches from one another.

10. The oil separator of claim 9, wherein at least one of said plurality of augers (66, 266, 266') does not have a valve head (229) disposed therein, wherein said at least one auger (66, 266, 266') having a valve head (229) disposed in said inlet chamber (215) has a helical flight (70, 270, 270') with a first helical pitch and said at least one auger (66, 266, 266') not having a plunger head disposed therein has a helical flight (70, 270, 207') with a second helical pitch, said first helical pitch being greater than said second helical pitch.

11. The oil separator of claim 1, wherein said augers (66, 266, 266') have one of a protrusion (223) or a recess and said cavities (52, 252) have the other of a protrusion (223) or a recess, said protrusion (223) and said recess being configured for a snap fit with one another.

12. The oil separator of claim 11, wherein said protrusion (223) is formed as an annular rib (208) and said recess is formed as an annular groove (205),
wherein preferably each of said augers (66, 266, 266') have said annular rib (208) and each of said cavities (52, 252) have said annular groove (205), said annular rib (208) being sized for a snap fit in said annular groove (205).

13. The oil separator of claim 1, further including a protrusion (223) extending radially inwardly from said annular wall (214), said protrusion (223) forming a stop surface (232) configured to confront said valve head (229) to limit the movement of said valve head (229) within said inlet chamber (215) away from said end cap (212).

14. The oil separator of claim 1, wherein each of said cavities (52, 252) is configured the same for interchangeable receipt of any one of said plurality of augers (66, 266, 266').

## Patentansprüche

1. Ölabscheider zum Abscheiden von Öl von ölbeladenen Gasen, umfassend:
ein Gehäuse (22, 222) mit einer Mehrzahl von Hohlräumen, wobei sich jeder der Hohlräume zwischen einem proximalen Ende und einem distalen Ende erstreckt;
eine Mehrzahl von Schnecken (66, 266, 266'), wobei jede der Schnecken (66, 266, 266') einen Spiralgang aufweist, der sich um eine Längszentralachse (207) zwischen einem Einlassende und einem Auslassende erstreckt, wobei die Schnecken (66, 266, 266') in getrennten der Hohlräume angeordnet sind, um spiralförmige Strömungswege um die Längszentralachsen (207) zu bilden;
**dadurch gekennzeichnet, dass**
mindestens eine der Schnecken (66, 266, 266') eine ringförmige Wand (214) aufweist, die sich von dem Einlassende um die Längszentralachse (207) erstreckt, wobei die ringförmige Wand (214) eine Einlasskammer (215) begrenzt;
eine Endkappe (212), die an der ringförmigen Wand (214) über der Einlasskammer befestigt ist, wobei die Endkappe einen Einlass (213) aufweist;
ein Kolbenventil (227) mit einem Ventilkopf (229), der in der Einlasskammer (215) angeordnet ist; und
ein Federelement (235), das konfiguriert ist, um den Ventilkopf (229) in eine geschlossene Position in einer abgedichteten Anlage mit der Endkappe (212) vorzuspannen, um eine Abdichtung über dem Einlass (213) zu perfektionieren, um die Strömung von ölbeladenen Gasen durch dieses zu verhindern; wobei der Ventilkopf (229) innerhalb der Einlasskammer (215) gegen die Vorspannung des Federelements (235) in eine offene Position weg von der Endkappe (212) beweglich ist, wenn Druck auf den Ventilkopf (229) ausgeübt ist, der ausreichend ist, um die Vorspannung des Federelements (235) zu überwinden,
wobei die Endkappe (212) eine Durchgangsöffnung (221) aufweist, die sich entlang der Längszentralachse (207) erstreckt, und das Kolbenventil (227) einen Ventilschaft (231) aufweist, der sich von dem Ventilkopf (229) durch die Durchgangsöffnung (221) erstreckt.

2. Ölabscheider nach Anspruch 1, wobei die Endkappe (212) einen ringförmigen Außenumfang (216) aufweist, der sich zwischen der oberen und unteren Wand (217, 218) erstreckt, wobei sich die Durchgangsöffnung (221) durch die obere und untere Wand (217, 218) erstreckt und der Einlass (213) sich in den Außenumfang (216) und durch die untere Wand (218) erstreckt.

3. Ölabscheider nach Anspruch 2, ferner umfassend eine Mehrzahl von Stegen (219), die sich zwischen der oberen und unteren Wand (217, 218) erstrecken, wobei sich der Einlass (213) zwischen den Stegen (219) erstreckt.

4. Ölabscheider nach Anspruch 2, wobei der Ventilschaft (231) mindestens einen Abschnitt mit einer nicht kreisförmigen äußeren Umfangsfläche bei Betrachtung im Querschnitt quer zur Längszentralachse (207) aufweist, wobei die Durchgangsöffnung (221) in der oberen Wand (217) eine Umfangsfläche (233) aufweist, die zumindest teilweise mit der nicht kreisförmigen äußeren Umfangsfläche des Ventilschafts (231) übereinstimmt, um das seitliche Spiel des Ventilschafts (231) innerhalb der Durchgangsöffnung (221) in der oberen Wand (217) zu verhindern.

5. Ölabscheider nach Anspruch 4, wobei die Durchgangsöffnung (221) in der unteren Wand (218) eine vergrößerte Umfangsfläche relativ zu dem Ventilschaft (231) aufweist, um den Abschnitt des Einlasses (213) zu bilden, der sich durch die untere Wand (218) zwischen dem Ventilschaft (231) und der vergrößerten Umfangsfläche der Durchgangsöffnung (221) erstreckt.

6. Ölabscheider nach Anspruch 1, wobei das Federelement (235) um den Ventilschaft (231) angeordnet ist.

7. Ölabscheider nach Anspruch 6, wobei das Federelement (235) eine Schraubenfeder ist.

8. Ölabscheider nach Anspruch 7, ferner umfassend ein Halteelement (237), das an dem Ventilschaft (231) befestigt ist und das Federelement (235) zwischen der Endkappe (212) und dem Halteelement (237) hält,
wobei das Halteelement (237) vorzugsweise über einen hitzegefügten Abschnitt des Ventilschafts (231) an dem Ventilschaft (231) befestigt ist.

9. Ölabscheider nach Anspruch 1, wobei mindestens einige der Spiralgänge (70, 270, 270') unterschiedliche Spiralsteigungen voneinander aufweisen.

10. Ölabscheider nach Anspruch 9, wobei mindestens eine der Mehrzahl von Schnecken (66, 266, 266') keinen darin angeordneten Ventilkopf (229) aufweist, wobei die mindestens eine Schnecke (66, 266, 266') mit einem Ventilkopf (229), der in der Einlasskammer (215) angeordnet ist, einen Spiralgang (70, 270, 270') mit einer ersten Spiralsteigung aufweist und die mindestens eine Schnecke (66, 266, 266'), die keinen darin angeordneten Kolbenkopf aufweist, einen Spiralgang (70, 270, 207') mit einer zweiten spiralförmigen Steigung aufweist, wobei die erste Spiralsteigung größer als die zweite Spiralsteigung ist.

11. Ölabscheider nach Anspruch 1, wobei die Schnecken (66, 266, 266') eines von einem Vorsprung (223) oder einer Ausnehmung aufweisen und die Hohlräume (52, 252) das andere von einem Vorsprung (223) oder einer Ausnehmung aufweisen; wobei der Vorsprung (223) und die Ausnehmung für eine Schnapppassung miteinander konfiguriert sind.

12. Ölabscheider nach Anspruch 11, wobei der Vorsprung (223) als ringförmige Rippe (208) ausgebildet ist und die Ausnehmung als ringförmige Nut (205) ausgebildet ist,
wobei vorzugsweise jede der Schnecken (66, 266, 266') die ringförmige Rippe (208) und jeder der Hohlräume (52, 252) die ringförmige Nut (205) aufweist, wobei die ringförmige Rippe (208) für eine Schnapppassung in der ringförmigen Nut (205) bemessen ist.

13. Ölabscheider nach Anspruch 1, ferner umfassend einen Vorsprung (223), der sich radial nach innen von der Ringwand (214) erstreckt, wobei der Vorsprung (223) eine Anschlagfläche (232) bildet, die konfiguriert ist, um dem Ventilkopf (229) gegenüberzuliegen, um die Bewegung des Ventilkopfes (229) innerhalb der Einlasskammer (215) weg von der Endkappe (212) zu begrenzen.

14. Ölabscheider nach Anspruch 1, wobei jeder der Hohlräume (52, 252) für die austauschbare Aufnahme einer der Mehrzahl von Schnecken (66, 266, 266') gleich konfiguriert ist.

## Revendications

1. Séparateur d'huile destiné à séparer de l'huile dans des gaz chargés d'huile, comprenant :
un boîtier (22, 222) ayant une pluralité de cavités, chacune desdites cavités s'étendant entre une extrémité proximale et une extrémité distale ;
une pluralité de vis d'Archimède (66, 266, 266'), chacune desdites vis d'Archimède (66, 266, 266') ayant une aile hélicoïdale s'étendant autour d'un axe central longitudinal (207) entre une extrémité d'entrée et une extrémité de sortie, lesdites vis d'Archimède (66, 266, 266') étant disposées dans des cavités séparées parmi lesdites cavités pour former des trajets d'écoulement hélicoïdaux autour desdits axes centraux longitudinaux (207) ;
**caractérisé en ce que**
au moins une desdites vis d'Archimède (66, 266, 266') a une paroi annulaire (214) s'étendant depuis ladite extrémité d'entrée autour dudit axe central longitudinal (207), ladite paroi annulaire (214) bordant une chambre intérieure (215) ;
un capuchon d'extrémité (212) fixé à ladite paroi annulaire (214) au-dessus de ladite chambre d'entrée, ledit capuchon d'extrémité ayant une entrée (213) ;
une vanne à plongeur (227) ayant une tête de vanne (229) disposée dans ladite chambre d'entrée (215) ; et
un élément formant ressort (235) configuré pour solliciter ladite tête de vanne (229) jusque dans une position fermée en butée étanche avec ledit capuchon d'extrémité (212) pour parfaire une étanchéité au-dessus de ladite entrée (213) afin d'empêcher l'écoulement des gaz chargés d'huile à travers celle-ci, ladite tête de vanne (229) pouvant être déplacée à l'intérieur de ladite chambre d'entrée (215) à l'encontre de la sollicitation dudit élément formant ressort (235) jusqu'à une position ouverte en éloignement dudit capuchon d'extrémité (212) en réponse à l'application d'une pression contre ladite tête de vanne (229) suffisante pour surmonter la sollicitation dudit élément formant ressort (235),
dans lequel ledit capuchon d'extrémité (212) a une ouverture traversante (221) s'étendant le long dudit axe central longitudinal (207) et ladite vanne à plongeur (227) a une tige de vanne (231) s'étendant depuis ladite tête de vanne (229) à travers ladite ouverture traversante (221).

2. Séparateur d'huile selon la revendication 1, dans lequel ledit capuchon d'extrémité (212) a une périphérie extérieure annulaire (216) s'étendant entre une paroi supérieure et une paroi inférieure (217, 218), ladite ouverture traversante (221) s'étendant à travers ladite paroi supérieure et ladite paroi inférieure (217, 218) et ladite entrée (213) s'étendant jusque dans ladite périphérie extérieure (216) et à travers ladite paroi inférieure (218).

3. Séparateur d'huile selon la revendication 2, incluant en outre une pluralité de barrettes (219) s'étendant entre ladite paroi supérieure et ladite paroi inférieure (217, 218), ladite entrée (213) s'étendant entre lesdites barrettes (219).

4. Séparateur d'huile selon la revendication 2, dans lequel ladite tige de vanne (231) inclut au moins une portion ayant une surface périphérique extérieure non circulaire, telle que vue dans une section transversale considérée transversalement audit axe central longitudinal (207), avec ladite ouverture traversante (221) dans ladite paroi supérieure (217) ayant une surface périphérique (233) se conformant au moins en partie avec ladite surface périphérique extérieure non circulaire de ladite tige de vanne (231) pour empêcher un jeu latéral de ladite tige de vanne (231) à l'intérieur de ladite ouverture traversante (221) dans ladite paroi supérieure (217).

5. Séparateur d'huile selon la revendication 4, dans lequel ladite ouverture traversante (221) dans ladite paroi inférieure (218) a une surface périphérique agrandie relativement à ladite tige de vanne (231) pour former la portion de ladite entrée (213) s'étendant à travers ladite paroi inférieure (218) entre ladite tige de vanne (231) et ladite surface périphérique agrandie de ladite ouverture traversante (221).

6. Séparateur d'huile selon la revendication 1, dans lequel ledit élément formant ressort (235) est disposé autour de ladite tige de vanne (231).

7. Séparateur d'huile selon la revendication 6, dans lequel ledit élément formant ressort (235) est un ressort à boudin.

8. Séparateur d'huile selon la revendication 7, incluant en outre un élément de retenue (237) fixé à ladite tige de vanne (231) et capturant ledit élément formant ressort (235) entre ledit capuchon d'extrémité (212) et ledit élément de retenue (237),
dans lequel ledit élément de retenue (237) est de préférence fixé à ladite tige de vanne (231) via une portion évasée à chaud de ladite tige de vanne (231).

9. Séparateur d'huile selon la revendication 1, dans lequel au moins certaines desdites ailes hélicoïdales (70, 270, 270') ont des pas hélicoïdaux différents les uns des autres.

10. Séparateur d'huile selon la revendication 9, dans lequel au moins une de ladite pluralité de vis d'Archimède (66, 266, 266') n'a pas de tête de vanne (229) disposée à l'intérieur, dans lequel ladite au moins une vis d'Archimède (66, 266, 266') ayant une tête de vanne (229) disposée dans ladite chambre d'entrée (215) a une aile hélicoïdale (70, 270, 270') avec un premier pas hélicoïdal, et ladite au moins une vis d'Archimède (66, 266, 266') n'ayant pas de tête de plongeur disposée à l'intérieur a une aile hélicoïdale (70, 270, 270') avec un second pas hélicoïdal, ledit premier pas hélicoïdal étant plus grand que ledit second pas hélicoïdal.

11. Séparateur d'huile selon la revendication 1, dans lequel lesdites vis d'Archimède (66, 266, 266') ont un élément parmi une projection (223) ou un évidement, et lesdites cavités (52, 252) ont l'autre élément parmi une projection (223) ou un évidement, ladite projection (223) et ledit évidement étant configurés pour être connectés par encliquetage l'un avec l'autre.

12. Séparateur d'huile selon la revendication 11, dans lequel ladite projection (223) est formée comme une nervure annulaire (208) et ledit évidement est formé comme une rainure annulaire (205),
dans lequel de préférence chacune desdites vis d'Archimède (66, 266, 266') a ladite nervure annulaire (208) et chacune desdites cavités (52, 252) a ladite rainure annulaire (205), ladite nervure annulaire (208) étant dimensionnée pour une connexion par encliquetage dans ladite rainure annulaire (205).

13. Séparateur d'huile selon la revendication 1, incluant en outre une projection (223) s'étendant radialement vers l'intérieur depuis ladite paroi annulaire (214), ladite projection (223) formant une surface d'arrêt (232) configurée pour se retrouver en face de ladite tête de vanne (229) pour limiter le déplacement de ladite tête de vanne (229) à l'intérieur de la chambre d'entrée (215) en éloignement dudit capuchon d'extrémité (212).

14. Séparateur d'huile selon la revendication 1, dans lequel chacune desdites cavités (52, 252) est configurée de manière identique pour une réception interchangeable de l'une quelconque de ladite pluralité de vis d'Archimède (66, 266, 266').
